# EUROPEAN PATENT APPLICATION

(11) **EP 4 124 634 A1**
(43) Date of publication of application: **01.02.2023**
(21) Application number: 22187330.0
(22) Date of filing: 27.07.2022
(51) Int. Cl.: C08J 3/22, B32B 27/08, B32B 27/32, B32B 27/40, C08J 5/18, C09J 7/29

(54) **FILM HAVING LIGHT TRANSMITTANCE AND MANUFACTURING METHOD THEREOF**

(30) Priority: 30.07.2021 TW 110128220
(71) Applicant: San Fang Chemical Industry Co., Ltd., Kaohsiung City (TW)
(72) Inventor: LIN, CHIH-YI, KAOHSIUNG CITY (TW); CHENG, KUO-KUANG, KAOHSIUNG CITY (TW); LIN, CHIH-CHEN, KAOHSIUNG CITY (TW); CHIANG, KUN LIN, KAOHSIUNG CITY (TW); LO, KUO-LI, KAOHSIUNG CITY (TW); SHIH, CHIA-TSAN, KAOHSIUNG CITY (TW)
(74) Representative: 2K Patentanwälte Blasberg Kewitz & Reichel

(57) **Abstract**

The present disclosure relates to a film having light transmittance and a manufacturing method thereof. The film (10) includes a polyurethane, PU, surface layer (11), and a thermoplastic elastomer layer (12). The thermoplastic elastomer layer is disposed under the PU surface layer. The thermoplastic elastomer layer includes color masterbatch material. The color masterbatch material is between 0.1-1% weight. By controlling the amount of color masterbatch material in the thermoplastic elastomer layer, the film of the present disclosure has real color appearance and good light transmittance.

## Description

### FIELD

The disclosure relates to a film having light transmittance and a manufacturing method thereof.

### BACKGROUND

There is a trend for the conventional decorative materials in the market to have light transmission and surface diversification for purpose of visual enjoyment and demand for hi-tech-ish of customers. However, most of the decorative materials are plastic materials such as PVC or PU, with real color for the surface, resulting in limited changes in the surface, which are difficult to meet the demand for surface diversification in the current market. Therefore, there needs to be a novel product to meet such demand.

### SUMMARY OF THE INVENTION

In accordance with one aspect of the present disclosure, a film having light transmittance includes a polyurethane (PU) surface layer and a thermoplastic elastomer layer. The thermoplastic elastomer layer is disposed below the PU surface layer. The thermoplastic elastomer layer has a color masterbatch material accounting for 0.1-1% weight.

In accordance with one aspect of the present disclosure, a manufacturing method of a film having light transmittance includes: mixing thermoplastic elastomer particles and color masterbatches and feeding into an extruder; extruding a thermoplastic elastomer layer by the extruder; and disposing a PU surface layer on the thermoplastic elastomer layer.

### BRIEF DESCRIPTION OF THE DRAWINGS

Aspects of the present disclosure are understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 is a schematic structural diagram of a film having light transmittance according to an embodiment of the present disclosure.
FIG. 2 is a schematic structural diagram of a film having light transmittance according to another embodiment of the present disclosure.
FIG. 3 is a schematic flowchart of a manufacturing method of a film having light transmittance according to an embodiment of the present disclosure.

### DETAILED DESCRIPTION OF THE INVENTION

It is to be understood that the following disclosure provides many different embodiments or examples, for implementing different features of various embodiments. Specific examples of components and arrangements are described below to simplify the present disclosure. The present disclosure may, however, be embodied in many different forms and should not be construed as being limited to the embodiments set forth herein; rather, these embodiments are provided so that this description will be thorough and complete, and will fully convey the present disclosure to those of ordinary skill in the art. It will be apparent, however, that one or more embodiments may be practiced without these specific details.

In addition, the present disclosure may repeat reference numerals and/or letters in the various examples. This repetition is for the purpose of simplicity and clarity and does not in itself dictate a relationship between the various embodiments and/or configurations discussed.

It will be understood that when an element is referred to as being "on" another element, it can be directly on the other element or intervening elements may be present. In contrast, when an element is referred to as being "directly on" another element, there are no intervening elements present.

It will be understood that singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this disclosure belongs. It will be further understood that terms; such as those defined in commonly used dictionaries, should be interpreted as having a meaning that is consistent with their meaning in the context of the relevant art and the present disclosure, and will not be interpreted in an idealized or overly formal sense unless expressly so defined herein.

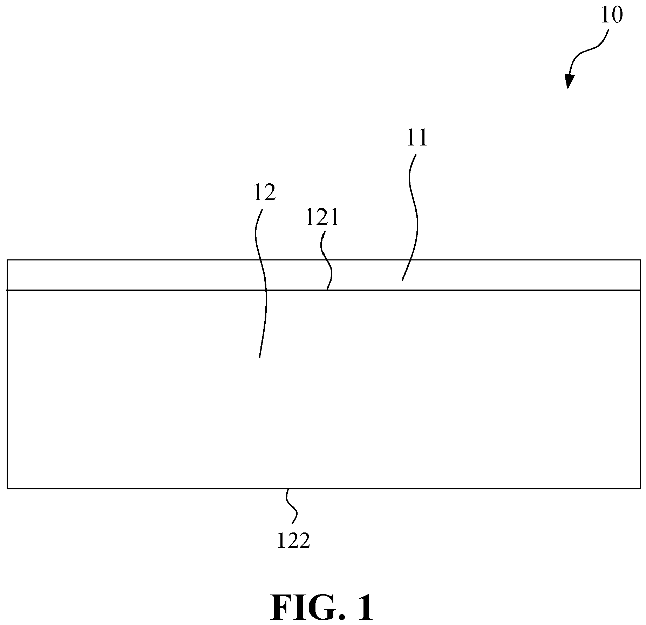

FIG. 1 is a schematic structural diagram of a film having light transmittance according to an embodiment of the present disclosure. In an embodiment, a film 10 having light transmittance includes: a polyurethane (PU) surface layer 11 and a thermoplastic elastomer layer 12. The thermoplastic elastomer layer 12 is disposed below the PU surface layer 11. The thermoplastic elastomer layer 12 includes a color masterbatch material accounting for 0.1-1% weight. In an embodiment, the film 10 having light transmittance can be used in decorative materials, for example, a decorative film of a vehicle is disposed on a dashboard of the vehicle, but is not limited to the above.

In an embodiment, the thermoplastic elastomer layer 12 has a first surface 121 and a second surface 122. The second surface 122 is opposite to the first surface 121. In an embodiment, the PU surface layer 11 is disposed on the first surface 121 of the thermoplastic elastomer layer 12. The thermoplastic elastomer layer 12 may be made of a thermoplastic polyolefin, TPO, material or a thermoplastic polyurethane, TPU, material. The PU surface layer 11 may be waterborne polyurethane.

In an embodiment, the thermoplastic elastomer layer 12 has a hardness of 50-98 A, preferably 85 A. In an embodiment, the proportion of the color masterbatch material is preferably 0.2-0.3% weight. In an embodiment, the color masterbatch material has a color intensity of 10-90%, preferably 40%. In an embodiment, the thermoplastic elastomer layer 12 has a thickness of 0.05-0.5 mm, preferably 0.35 mm.

In an embodiment, the film 10 has a light transmittance of 5-50 measured by a spectrometer (such as Color Eye 7000A), preferably 10-15.

In an embodiment, the film 10 in the present disclosure has a real-color surface appearance by controlling the amount of color masterbatch added in the thermoplastic elastomer layer 12. The film 10 in the present disclosure can be used to coat a light-emitting element, and has good light transmittance after coating the light-emitting element. When the light-emitting element emits light, the pattern of the light-emitting element can be displayed of the surface of the film 10 in the present disclosure.

In an embodiment, the surface of the PU surface layer 11 of the film 10 in the present disclosure may be treated to improve the physical properties of the surface, and changes in colored water and optical haze may also be provided to increase the surface diversity while maintaining the light transmission rather than reducing it.

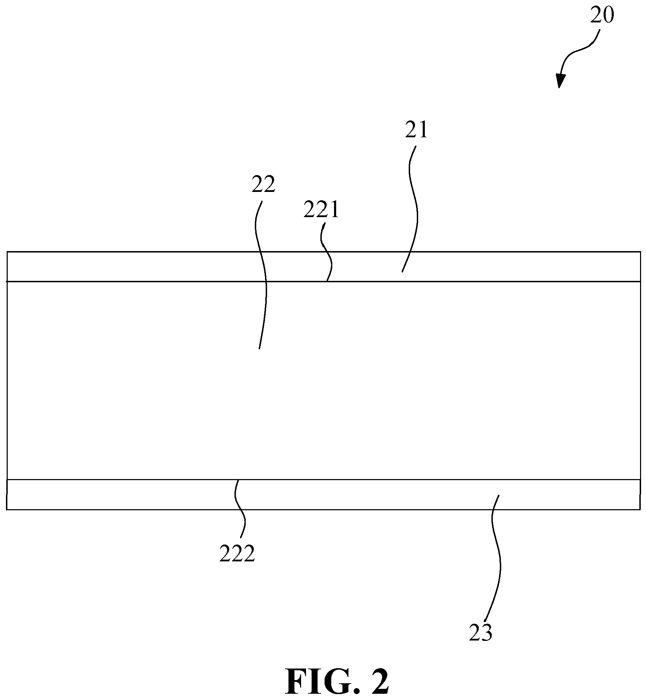

FIG. 2 is a schematic structural diagram of a film having light transmittance according to another embodiment of the present disclosure. In an embodiment, a film 20 having light transmittance includes: a PU surface layer 21, a thermoplastic elastomer layer 22, and a glue layer 23. The glue layer 23 is disposed below the thermoplastic elastomer layer 22. The glue layer 23 may be made of a TPO material, a TPU material, or a PU material.

In an embodiment, the thermoplastic elastomer layer 22 has a first surface 221 and a second surface 222. The second surface 222 is opposite to the first surface 221. In an embodiment, the PU surface layer 21 is disposed on the first surface 221 of the thermoplastic elastomer layer 22. The glue layer 23 is disposed on the second surface 222 of the thermoplastic elastomer layer 22.

In an embodiment, the glue layer 23 allows the film 20 in the present disclosure to enhance the coating processability, so as to facilitate the coating of the film 20 in the present disclosure on the element.

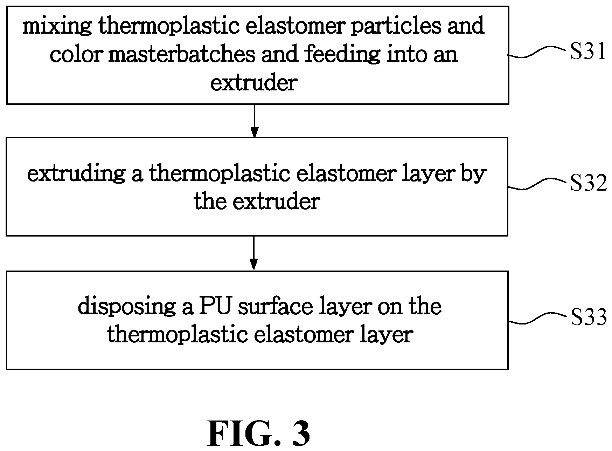

FIG. 3 is a schematic flowchart of a manufacturing method of a film having light transmittance according to an embodiment of the present disclosure. In combination with FIG. 1 and FIG. 3, first referring to step S31, thermoplastic elastomer particles and color masterbatches are mixed and fed into an extruder (not shown in the figure), and the color masterbatches account for 0.1-1% weight. In an embodiment, the proportion of the color masterbatch material is preferably 0.2-0.3% weight. In an embodiment, the color masterbatch material has a color intensity of 10-90%, preferably 40%. In an embodiment, the thermoplastic elastomer particles have a hardness of 50-98 A, preferably 85 A. In an embodiment, the thermoplastic elastomer particles may be TPO particles or TPU particles.

Referring to step S32, a thermoplastic elastomer layer 12 is extruded by the extruder. In an embodiment, the temperature of the extruder is set to 150-250°C, and the temperature of the die head of the extruder is set to 160-220°C. In an embodiment, the temperature of the extruder may be set to 180°C, 220°C, and 220°C in sequence, and the temperature of the die head of the extruder is set to 200°C.

In an embodiment, after the step of extruding the thermoplastic elastomer layer 12, a step of formation is also provided, including: cooling down and forming the thermoplastic elastomer layer 12 by using a forming roller (not shown in the figure) at a speed of 3-10 M/min.

In an embodiment, the thermoplastic elastomer layer 12 cooled and formed by using the forming roller is rolled up and rested for 1-2 days for aging to obtain the desired light-transmitting thermoplastic elastomer layer 12.

In an embodiment, after the step of formation, a step of surface roughening is also provided, including: performing surface roughening on a surface of the thermoplastic elastomer layer 12 by using a corona machine (not shown in the figure) at a throughput of 7-8 M/min.

Referring to step S33, a PU surface layer 11 is disposed on the thermoplastic elastomer layer 12. In an embodiment, the PU surface layer 11 is printed on the roughened surface of the thermoplastic elastomer layer 12.

In an embodiment, after the step of disposing the PU surface layer 11, a step of drying is also provided, including: drying by using an oven (not shown in the figure) with a temperature set to 80-150°C and a throughput of 5-6 M/min, to obtain the film 10 having light transmittance in the present disclosure.

Referring to FIG. 1 and FIG. 3, the manufacturing method of the film having light transmittance in the present disclosure also includes a step of disposing a glue layer 23 below the thermoplastic elastomer layer 22. The glue layer 23 may be made of a TPU material or a PU material.

Therefore, by controlling the amount of color masterbatch added in the thermoplastic elastomer layer 12, the film 10 in the present disclosure has a real-color surface appearance and can simplify the manufacturing process of the film having light transmittance in the present disclosure, thereby increasing manufacturing efficiency and reducing manufacturing cost.

### [Embodiment 1]

TPO particles with a hardness of 85 A and color masterbatches were mixed and fed into an extruder. The proportion of the color masterbatches was 0.2% weight. The color intensity of the color masterbatches was 40%.

The temperature of the extruder was set to 180°C, 220°C, and 220°C in sequence, and the temperature of the die head of the extruder was set to 200°C, to extrude the thermoplastic elastomer layer.

The thermoplastic elastomer layer was cooled down to form a film by using a forming roller with a speed controlled to 6.0 M/min, and the thickness required for the thermoplastic elastomer layer was adjusted to 0.35 mm.

The thermoplastic elastomer layer was rolled up and rested for 1-2 days for aging to obtain the desired light-transmitting thermoplastic elastomer layer.

The light-transmitting thermoplastic elastomer layer was subjected to surface roughening by using a corona machine with a power of 3 kW at a throughput of 7-8 M/min.

After the corona surface processing, a waterborne polyurethane coating was printed on the thermoplastic elastomer layer and dried by an oven with a temperature set to 90°C, 100°C, and 120°C at a throughput of 5-6 M/min, to obtain the film having light transmittance in the present disclosure.

Then, the film having light transmittance in the present disclosure had a light transmittance of 14.2 measured by a spectrometer Color-Eye 7000A.

### [Embodiment 2]

TPO particles with a hardness of 85 A and color masterbatches were mixed and fed into an extruder. The proportion of the color masterbatches was 0.3% weight. The color intensity of the color masterbatches was 40%.

The temperature of the extruder was set to 180°C, 220°C, and 220°C in sequence, and the temperature of the die head of the extruder was set to 200°C, to extrude the thermoplastic elastomer layer.

The thermoplastic elastomer layer was cooled down to form a film by using a forming roller with a speed controlled to 6.0 M/min, and the thickness required for the thermoplastic elastomer layer was adjusted to 0.35 mm.

The thermoplastic elastomer layer was rolled up and rested for 1-2 days for aging to obtain the desired light-transmitting thermoplastic elastomer layer.

The light-transmitting thermoplastic elastomer layer was subjected to surface roughening by using a corona machine with a power of 3 kW at a throughput of 7-8 M/min.

After the corona surface processing, a waterborne polyurethane coating was printed on the thermoplastic elastomer layer and dried by an oven with a temperature set to 90°C, 100°C, and 120°C at a throughput of 5-6 M/min, to obtain the film having light transmittance in the present disclosure.

Then, the film having light transmittance in the present disclosure had a light transmittance of 10.8 measured by a spectrometer Color-Eye 7000A.

### [Embodiment 3]

TPU particles with a hardness of 85 A and color masterbatches were mixed and fed into an extruder. The proportion of the color masterbatches was 0.2% weight. The color intensity of the color masterbatches was 40%.

The temperature of the extruder was set to 160°C, 200°C, and 200°C in sequence, and the temperature of the die head of the extruder was set to 180°C, to extrude the thermoplastic elastomer layer.

The thermoplastic elastomer layer was cooled down to form a film by using a forming roller with a speed controlled to 6.0 M/min, and the thickness required for the thermoplastic elastomer layer was adjusted to 0.35 mm.

The thermoplastic elastomer layer was rolled up and rested for 1-2 days for aging to obtain the desired light-transmitting thermoplastic elastomer layer.

The light-transmitting thermoplastic elastomer layer was subjected to surface roughening by using a corona machine with a power of 3 kW at a throughput of 7-8 M/min.

After the corona surface processing, a waterborne polyurethane coating was printed on the thermoplastic elastomer layer and dried by an oven with a temperature set to 90°C, 100°C, and 120°C at a throughput of 5-6 M/min, to obtain the film having light transmittance in the present disclosure.

Then, the film having light transmittance in the present disclosure had a light transmittance of 14 measured by a spectrometer Color-Eye 7000A.

Moreover, the scope of the present application is not intended to be limited to the particular embodiments of the process, machine, manufacture, and composition of matter, means, methods and steps described in the specification. As those skilled in the art will readily appreciate form the present disclosure, processes, machines, manufacture, compositions of matter, means, methods, or steps, presently existing or later to be developed, that perform substantially the same function or achieve substantially the same result as the corresponding embodiments described herein may be utilized in accordance with some embodiments of the present disclosure.

Accordingly, the appended claims are intended to include within their scope such processes, machines, manufacture, and compositions of matter, means, methods or steps. In addition, each claim constitutes a separate embodiment, and the combination of various claims and embodiments are within the scope of the disclosure.

## Claims

1. A film (10; 20) having light transmittance, comprising:
a polyurethane, PU, surface layer (11; 21); and
a thermoplastic elastomer layer (12; 22), disposed below the PU surface layer (11; 21), the thermoplastic elastomer layer (12; 22) having a color masterbatch material accounting for 0.1-1% weight.

2. The film (10; 20) of claim 1, wherein the thermoplastic elastomer layer (12; 22) is made of a thermoplastic polyolefin, TPO, material or a thermoplastic polyurethane, TPU, material.

3. The film (10; 20) of claim 1 or 2, wherein the thermoplastic elastomer layer (12; 22) has a hardness of 50-98 A.

4. The film (10; 20) of one of the preceding claims, wherein the proportion of the color masterbatch material is 0.2-0.3% weight.

5. The film (10; 20) of one of the preceding claims, wherein the color masterbatch material has a color intensity of 10-90%.

6. The film (10; 20) of one of the preceding claims, wherein the film has a light transmittance of 5-50.

7. The film (20) of one of the preceding claims, further comprising a glue layer (23), disposed below the thermoplastic elastomer layer (22).

8. The film (20) of claim 7, wherein the glue layer (23) is made of a TPO material, a TPU material, or a PU material.

9. A manufacturing method of a film (10; 20) having light transmittance, comprising:
(S31) mixing thermoplastic elastomer particles and color masterbatches and feeding into an extruder;
(S32) extruding a thermoplastic elastomer layer by the extruder; and
(S33) disposing a PU surface layer on the thermoplastic elastomer layer.

10. The manufacturing method of claim 9, wherein the temperature of the extruder is set to 150-250°C, and the temperature of the die head of the extruder is set to 160-220°C.

11. The manufacturing method of claim 9 or 10, wherein after the step of extruding the thermoplastic elastomer layer, further comprising a step of formation for cooling down and forming the thermoplastic elastomer layer by using a forming roller at a speed of 3-10 M/min.

12. The manufacturing method of claim 11, wherein after the step of formation, further comprising a step of surface roughening for performing surface roughening on a surface of the thermoplastic elastomer layer by using a corona machine at a throughput of 7-8 M/min..

13. The manufacturing method of claim 12, wherein The PU surface layer is printed on the roughened surface of the thermoplastic elastomer layer.

14. The manufacturing method of one of claims 9-13, wherein after the step of disposing the PU surface layer, further comprising a step of drying for drying by using an oven with a temperature set to 80-150°C and a throughput of 5-6 M/min.

15. The manufacturing method of one of claims 9-14, further comprising a step of disposing a glue layer below the thermoplastic elastomer layer.
